# EUROPÄISCHE PATENTANMELDUNG

(11) **EP 1 213 128 A1**
(43) Veröffentlichungstag der Anmeldung: **12.06.2002**
(21) Anmeldenummer: 01123414.3
(22) Anmeldetag: 28.09.2001
(51) Int. Cl.: B29C 67/00, B29C 44/56, B29C 59/02, A63H 33/04

(54) **Formgebungswerkzeug und -verfahren zum Rundformen eines Spielbausteins**

(30) Priorität: 23.10.2000 DE 10052543
(71) Anmelder: Artur Fischer TIP GmbH & Co. KG, 72178 Waldachtal (DE)
(72) Erfinder: Fischer, Artur, Prof.Dr.phil.h.c.Dr.-Ing.E.h., 72178 Waldachtal (DE)

(57) **Zusammenfassung**

Die Erfindung betrifft ein Formgebungswerkzeug (10) zum Rundformen eines aus einem festen Schaum bestehenden, plastisch verformbaren Spielbausteins (16). Das Formgebungswerkzeug (10) weist zwei plattenförmige Formgebungsteile (12) mit einer eine Rändelung ausweisenden Wälzfläche (14) auf. Der Spielbaustein (16) wird angefeuchtet, zwischen die beiden Formgebungsteile (12) eingelegt und durch hin- und herbewegen eines der beiden Formgebungsteile (12) auf den Wälzflächen (14) abgerollt. Durch das Abrollen des angefeuchteten Spielbausteins (16) auf den Wälzflächen (14) verbessert sich eine Zylinderform des Spielbausteins (16). Wird der Spielbaustein (16) vor dem Abrollen nicht angefeuchtet, reißt er beim Abrollen im Innern und es entsteht ein schlauchförmiger Hohlkörper.

## Beschreibung

Die Erfindung betrifft ein Formgebungswerkzeug zum Rundformen eines aus einem festen Schaum bestehenden, plastisch verformbaren Spielbausteins gemäß dem Oberbegriff des Anspruchs 1. Des weiteren betrifft die Erfindung ein Verfahren zur Herstellung eines Hohlkörpers aus einem aus einem festen Schaum bestehenden Spielbaustein gemäß dem Oberbegriff des Anspruchs 8.

Ein aus einem festen Schaum bestehender, plastisch verformbarer Spielbaustein ist bekannt aus der DE 197 03 038. Der bekannte Spielbaustein besteht aus einem Stärkematerial, er weist Stärke oder ein stärkehaltiges Material auf. Das Stärkematerial wird in einem Extruder aufgeschmolzen, es expandiert beim Austritt aus dem Extruder zu einem Schaum, der abkühlt und erstarrt. Ein Herstellungsverfahren für die aus einem festen Schaum bestehenden, plastisch verformbaren Spielbausteine ist offenbart in der DE 40 16 597 A1. Die bekannten Spielbausteine sind plastisch verformbar, wobei sich ihre Verformbarkeit durch Anfeuchten verbessert. Die bekannten Spielbausteine haben beispielsweise eine Zylinderform mit allerdings schlechter Form- und Oberflächengenauigkeit. Die Oberfläche der bekannten Spielbausteine weist gegenüber einer zylindrischen Fläche Ausbauchungen und Einbeulungen auf, die bekannten Spielbausteine weichen von einer Zylinderform durch Verkrümmungen in Längsrichtung auf ab.

Der Erfindung liegt die Aufgabe zugrunde, ein Formgebungswerkzeug zum Rundformen von Spielbausteinen der vorstehend erläuterten Art vorzuschlagen, mit dem sich die Formgenauigkeit der Spielbausteine verbessern lässt.

Die Aufgabe wird erfindungsgemäß durch die Merkmale des Anspruchs 1 gelöst. Das erfindungsgemäße Formgebungswerkzeug mit den Merkmalen des Anspruchs 1 weist zwei Formgebungsteile auf, die relativ zueinander beweglich sind. Eines der beiden Formgebungsteile weist eine raue Wälzfläche zum Abrollen des Spielbausteins auf. Die Rauheit der Wälzfläche bewirkt, dass ein über die Wälzfläche bewegter Spielbaustein auf der Wälzfläche abrollt und keinen Schlupf auf der Wälzfläche aufweist. Auf einer glatten Oberfläche haben die bekannten Spielbausteine auf Grund ihrer von der Zylinderform abweichenden Form die Tendenz, zu rutschen, d.h. sie werden verschoben anstatt abzurollen.

Das andere Formgebungsteil des erfindungsgemäßen Werkzeugs dient zum Antrieb, also zum Bewegen des Spielbausteins über die Wälzfläche des einen Formgebungsteils, und zum Andrücken des Spielbausteins gegen die Wälzfläche. Zum Rundformen des Spielbausteins werden die beiden Formgebungsteile gegeneinander verschoben, insbesondere mehrfach hin- und herbewegt, so dass ein zwischen die beiden Formgebungsteile gelegter Spielbaustein auf der rauen Wälzfläche des einen Formgebungsteils abrollt. Vorzugsweise wird vor dem Rundformen eine Umfangsoberfläche des Spielbausteins angefeuchtet, um dessen Verformbarkeit zu verbessern. Die Bewegung der beiden Formgebungsteile relativ zueinander ist grundsätzlich maschinell möglich, vorzugsweise werden die beiden Formgebungsteile von Hand relativ zueinander bewegt.

Mit dem erfindungsgemäßen Formgebungswerkzeug lässt sich die Formgenauigkeit von aus einem festen Schaum bestehenden, plastisch verformbaren Spielbausteinen, wie sie insbesondere in der Einleitung dieser Beschreibung angegeben sind, verbessern. Durch das Rundformen mit dem erfindungsgemäßen Formgebungswerkzeug wird die Zylinderform der Spielbausteine verbessert, d.h. ihre Form entspricht nach dem Rundformen genauer einer geometrischen Zylinderform als vor dem Rundformen. Auch entspricht die Oberflächenform der Spielbausteine nach dem Rundformen mit dem erfindungsgemäßen Formgebungswerkzeugen genauer einer Zylinderfläche als vor dem Umformen, Ausbauchungen und Einbeulungen gegenüber einer zylindrischen Oberfläche sind zumindest verkleinert. Es ist allerdings einzuräumen, dass die mit dem erfindungsgemäßen Formgebungswerkzeug erreichbare Formgenauigkeit begrenzt ist und nicht mit einer beispielsweise aus der Metallbearbeitung bekannten Formgenauigkeit verglichen werden kann.

Weiterer Vorteil des erfindungsgemäßen Formgebungswerkzeugs ist, dass sich aus einem festen Schaum bestehende, plastisch verformbare Spielbausteine zu einem kleinerem Durchmesser umformen lassen. Des weiteren ermöglicht das erfindungsgemäße Formgebungswerkzeug eine kegelförmige Umformung der Spielbausteine indem die beiden Formgebungsteile beim gegeneinander Bewegen schräg zueinander gehalten werden, so dass sich ein Abstand der beiden Formgebungsteile voneinander quer zu ihrer Bewegungsrichtung verändert.

Eine Ausgestaltung der Erfindung sieht vor, dass das zweite Formgebungsteil ebenfalls eine raue Wälzfläche zum Abrollen des Spielbausteins aufweist. Die beiden Formgebungsteile können bei dieser Ausgestaltung der Erfindung identisch sein.

Eine Ausgestaltung der Erfindung sieht eine plattenförmige Ausbildung zumindest eines der beiden Formgebungsteile vor. Die raue Wälzfläche des Formgebungsteils ist vorzugsweise eine Ebene.

Zur Ausbildung der rauen Wälzfläche sieht eine Ausgestaltung der Erfindung eine Rändelung, insbesondere eine Verzahnung vor.

Bei einer Ausgestaltung der Erfindung weist das zweite Formgebungsteil eine Mitnehmereinrichtung für den Spielbaustein auf. Beim gegeneinander Bewegen der beiden Formgebungsteile des erfindungsgemäßen Formgebungswerkzeugs bewegt die Mitnehmereinrichtung den Spielbaustein über die Wälzfläche des einen Formgebungsteils.

In bevorzugter Ausgestaltung der Erfindung weist die Mitnehmereinrichtung eine rinnenförmige Ausnehmung zum Einlegen des Spielbausteins auf.

Des weiteren liegt der Erfindung die Aufgabe zugrunde, ein Verfahren zur Herstellung eines Hohlkörpers aus einem aus einem festen Schaum bestehenden Spielbaustein mittels des vorstehend erläuterten Formgebungswerkzeugs vorzuschlagen.

Diese Aufgabe wird erfindungsgemäß durch die Merkmale des Anspruchs 8 gelöst. Zur Herstellung eines Hohlkörpers aus dem Spielbaustein wird erfindungsgemäß der Spielbaustein nicht angefeuchtet, sondern unangefeuchtet durch gegeneinander Bewegen der beiden Formgebungsteile auf der Wälzfläche abgerollt. Dabei reißt der Spielbaustein im Innern und es entsteht ein schlauchförmiger Hohlkörper. Der Hohlkörper lässt sich beispielsweise in Längsrichtung aufschneiden und man erhält ein flächenförmiges, aus dem festen Schaum bestehendes Gebilde, das beispielsweise zur Dekoration oder zur Gestaltung von Modelllandschaften geeignet ist.

Die Erfindung wird nachfolgend anhand in der Zeichnung dargestellter Ausführungsbeispiele näher erläutert. Es zeigen:
- Figur 1: eine erste Ausführungsform eines erfindungsgemäßen Formgebungswerkzeugs in perspektivischer Darstellung;
- Figur 2: eine vergrößerte Darstellung einer Einzelheit II aus Figur 1; und
- Figur 3: ein zweites Ausführungsbeispiel eines erfindungsgemäßen Formgebungswerkzeugs in perspektivischer Darstellung.

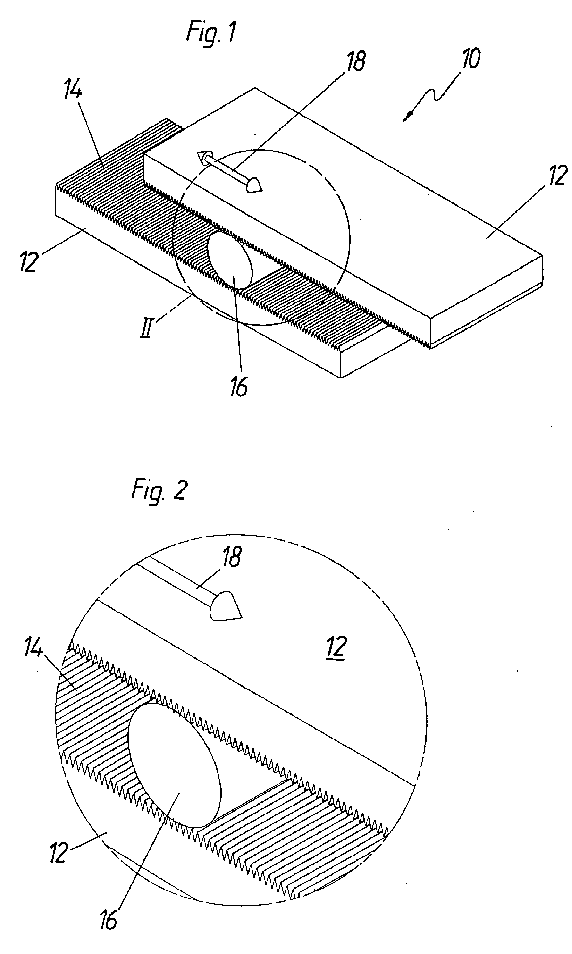

Das in Figur 1 dargestellte, erfindungsgemäße Formgebungswerkzeug 10 weist zwei identisch ausgebildete Platten als Formgebungsteile 12 auf, die in Draufsicht die Form länglicher Rechtecke aufweisen. Eine Oberfläche jedes Formgebungsteils 12 ist als Wälzfläche 14 ausgebildet. Die Wälzfläche 14 ist rau und eben, sie ist mit einer Rändelung in Form einer Verzahnung versehen. Die Rändelung/Verzahnung ist in der Einzelheitvergrößerung in Figur 2 gut erkennbar. Zähne der Verzahnung erstrecken sich quer über die Wälzfläche 14.

Das erfindungsgemäße Formgebungswerkzeug 10 dient zum Rundformen von aus einem festen Schaum bestehenden, plastisch verformbaren Spielbausteinen, von denen einer in der Zeichnung andeutungsweise dargestellt und mit der Bezugszahl 16 versehen ist. Derartige Spielbausteine sind beispielsweise aus der DE 197 03 038 bekannt. Sie sind mit einem Extruder aus einem Stärkematerial, also aus Stärke oder stärkehaltigem Material aufgeschäumt. Die bekannten Spielbausteine 16 haben näherungsweise die Form eines Zylinders mit geringer Form- und Oberflächengenauigkeit. Die Spielbausteine 16 sind plastisch verformbar, durch Anfeuchten ist ihre Verformbarkeit verbessert.

Zum Rundformen eines der aus dem festen Schaum bestehenden Spielbausteine 16 wird eine Umfangsoberfläche des Spielbausteins 16 angefeuchtet und der Spielbaustein 16 wird auf die Wälzfläche 14 eines der beiden Formgebungsteile 12 aufgelegt. Das andere Formgebungsteil 12 wird auf den Spielbaustein 16 aufgelegt, wobei seine Wälzfläche 14 der Wälzfläche 14 des einen Formgebungsteils 12 zugewandt ist. Die beiden Formgebungsteile 12 werden in etwa parallel zueinander gehalten, ihr Abstand voneinander wird vom zwischen ihnen befindlichen Spielbaustein 16 vorgegeben. Zum Rundformen des Spielbausteins 16 wird eines der Formgebungsteile 12 an den Spielbaustein 16 angedrückt und in Richtung des Doppelpfeils 18 in Bezug auf das andere Formgebungsteil 12 hin- und herbewegt. Die Bewegung der beiden Formgebungsteile 12 zueinander erfolgt in deren Längsrichtung, also quer zu den Zähnen der Verzahnung ihrer Wälzflächen 14. Durch das hin- und herbewegen der Formgebungsteile 12 bewegt sich auch der Spielbaustein 16 hin und her, er rollt auf den rauen Wälzflächen 14 ab. Dabei wird ein Umfangsoberflächenbereich des Spielbausteins 16 umgeformt und eine Formgenauigkeit des Spielbausteins 16 in dem Sinne verbessert, dass die Form des Spielbausteins 16 genauer einer geometrischen Zylinderform entspricht als vor dem Rundformen. Mit dem erfindungsgemäßen Formgebungswerkzeug 10 lässt sich die Form des aus dem festen Schaum bestehenden Spielbausteins 16 einer geometrischen Zylinderform annähern, eine exakte Zylinderform, wie sie idealisierend in der Zeichnung dargestellt ist, lässt sich allerdings nicht unbedingt erreichen.

Ein Durchmesser des Spielbausteins 16 lässt sich verkleinern, indem die Anzahl der Hin- und Herbewegungen der Formgebungsteile 12 erhöht und/oder der Druck der Formgebungsteile 12 gegen den Spielbaustein 16 vergrößert wird. Außerdem lässt sich der Spielbaustein 16 kegelförmig umformen indem die Formgebungsteile 12 beim hin- und herbewegen schräg zueinander gehalten werden, so dass sich ihr Abstand voneinander quer zur Bewegungsrichtung verändert, d.h. der Abstand der beiden Formgebungsteile 12 ist an einer Längsseite der Formgebungsteile 12 kleiner als an ihrer anderen Längsseite.

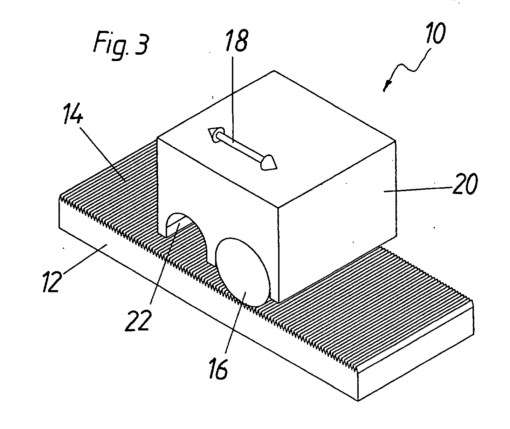

Figur 3 zeigt ein zweites Ausführungsbeispiel eines erfindungsgemäßen Formgebungswerkzeugs 10. Für gleiche Bauteile werden in Figur 3 gleiche Bezugszahlen wie in Figuren 1 und 2 verwendet. Das Formgebungswerkzeug 10 aus Figur 3 weist ebenfalls zwei Formgebungsteile 12, 20 auf, von denen eines identisch mit den Formgebungsteilen 12 des Formgebungswerkzeugs 10 aus Figuren 1 und 2 ausgebildet ist. Das eine Formgebungsteil 12 des in Figur 3 dargestellten Formgebungswerkzeugs 10 ist als rechteckförmige Platte mit einer eine Rändelung aufweisenden Wälzfläche 14 ausgebildet. Das andere Formgebungsteil 20 des in Figur 3 dargestellten Formgebungswerkzeugs 10 ist klotzförmig ausgebildet. Es weist zwei zueinander parallele, rinnenförmige Ausnehmungen 22 auf. Die Ausnehmungen 22 weisen einen halbkreisförmigen Querschnitt auf. In die Ausnehmungen 22 ist ein aus einem festen Schaum bestehender Spielbaustein 16 einlegbar. Die Ausnehmungen 22 weisen eine glatte Oberfläche auf, damit ein in der Ausnehmung 22 einliegender Spielbaustein 16 in der Ausnehmung 22 gleitet.

Zum Rundformen wird der Spielbaustein 16 an seiner Umfangsoberfläche angefeuchtet, auf die raue Wälzfläche 14 des plattenförmigen Formgebungsteils 12 aufgelegt und das andere Formgebungsteil 20 wird so aufgesetzt, dass der Spielbaustein 16 in einer der beiden Ausnehmungen 22 einliegt. Das Formgebungsteil 20 wird in Richtung des Doppelpfeils 18 in Bezug auf das eine Formgebungsteil 12 hin- und herbewegt und dabei der Spielbaustein 16 gegen die Wälzfläche 14 angedrückt. Aufgrund der Rauheit der Wälzfläche 14 rollt der Spielbaustein 16 auf der Wälzfläche 14 ab und gleitet in der Ausnehmung 22, die eine glatte Oberfläche aufweist. Ebenso wie zu Figuren 1 und 2 erläutert wird durch die hin- und hergehende Relativbewegung der beiden Formgebungsteile 12, 20 zueinander die Formgenauigkeit des Spielbausteins 16 verbessert. Sein Durchmesser lässt sich verkleinern, indem die Anzahl der Hin- und Herbewegungen erhöht und/oder der Druck der Formgebungsteile 12, 20 gegen den Spielbaustein 16 vergrößert wird. Zur Durchmesserverkleinerung des Spielbausteins 16 können Ausnehmungen 22 mit kleinerem Durchmesser vorgesehen sein. Ebenso wie zu Figuren 1 und 2 beschrieben lässt sich der Spielbaustein 16 kegelförmig Verformen, indem die beiden Formgebungsteile 12, 20 quer zu ihrer Bewegungsrichtung schräg zueinander gehalten werden.

Wird der Spielbaustein 16 vor dem Abrollen auf der Wälzfläche 14 nicht angefeuchtet, reißt der Spielbaustein 16 bei der Hin- und Herbewegung der beiden Formgebungsteile 12, 20 im Innern und es entsteht ein schlauchförmiger Hohlkörper aus dem Spielbaustein 16. Der schlauchförmige Hohlkörper kann in Längsrichtung durchgeschnitten werden, so dass ein flächiges, aus dem festen Schaum bestehendes Gebilde entsteht, das beispielsweise zur Dekoration und zur Gestaltung von Modelllandschaften verwendbar ist. Die Herstellung des schlauchförmigen Hohlkörpers aus dem Spielbaustein 16 ist mit dem in Figuren 1 und 2 dargestellten Formgebungswerkzeug 10 ebenso wie mit dem in Figur 3 dargestellte Formgebungswerkzeug 10 möglich.

## Patentansprüche

1. Formgebungswerkzeug zum Rundformen eines aus einem festen Schaum bestehendem, plastisch verformbaren Spielbausteins, **dadurch gekennzeichnet, dass** das Formgebungswerkzeug (10) zwei Formgebungsteile (12,20) aufweist, die relativ zueinander beweglich sind, und dass eines der beiden Formgebungsteile (12) eine raue Wälzfläche (14) zum Abrollen des Spielbausteins (16) aufweist.

2. Formgebungswerkzeug nach Anspruch 1, **dadurch gekennzeichnet, dass** das zweite Formgebungsteil (12) ebenfalls eine raue Wälzfläche (14) zum Abrollen des Spielbausteins (16) aufweist.

3. Formgebungswerkzeug nach Anspruch 1, **dadurch gekennzeichnet, dass** zumindest eines der beiden Formgebungsteile (12) plattenförmig ist.

4. Formgebungswerkzeug nach Anspruch 1, **dadurch gekennzeichnet, dass** die Wälzfläche (14) eine Ebene ist.

5. Formgebungswerkzeug nach Anspruch 1, **dadurch gekennzeichnet, dass** die Wälzfläche (14) eine Rändelung, insbesondere eine Verzahnung aufweist.

6. Formgebungswerkzeug nach Anspruch 1, **dadurch gekennzeichnet, dass** das zweite Formgebungsteil (20) eine Mitnehmereinrichtung (22) für den Spielbaustein (16) aufweist.

7. Formgebungswerkzeug nach Anspruch 6, **dadurch gekennzeichnet, dass** das zweite Formgebungsteil (20) eine rinnenförmige Ausnehmung (22), in die der Spielbaustein (16) einlegbar ist, als Mitnehmereinrichtung aufweist.

8. Verfahren zur Herstellung eines Hohlkörpers aus einem aus einem festen Schaum bestehenden Spielbaustein, mit einem Formgebungswerkzeug, das zwei Formgebungsteile aufweist, die relativ zueinander beweglich sind, wobei zumindest eines der beiden Formgebungsteile eine raue Wälzfläche zum Abrollen des Spielbausteins aufweist, **dadurch gekennzeichnet, dass** der aus dem festen Schaum bestehende Spielbaustein (16) mit dem anderen Formgebungsteil (12; 22) unangefeuchtet auf der rauen Wälzfläche (14) abgerollt wird.
